# EUROPÄISCHE PATENTANMELDUNG

(11) **EP 2 860 027 A1**
(43) Veröffentlichungstag der Anmeldung: **15.04.2015**
(21) Anmeldenummer: 14179809.0
(22) Anmeldetag: 05.08.2014
(51) Int. Cl.: B32B 5/18, B32B 5/22, B32B 5/32, B32B 3/26, B32B 3/30, A47L 13/16, A47L 13/10, B32B 27/42

(54) **Reinigungskörper**

(30) Priorität: 13.09.2013 DE 202013008136 U
(71) Anmelder: Jöst GmbH, 69483 Wald-Michelbach (DE)
(72) Erfinder: Jöst, Peter, 69518 Abtsteinach (DE)
(74) Vertreter: Hess, Peter K. G.

(57) **Zusammenfassung**

Reinigungskörper 1 aufweisend eine erste Platte 10 aus Melaminharzschaum und eine zweite Platte 20 aus Melaminharzschaum, wobei die erste Platte 10 an einer ersten Seite 12 eine genoppte Oberfläche aufweist und die zweite Platte 20 an einer ersten Seite 22 eine genoppte Oberfläche aufweist, wobei die erste Platte 10 an der genoppten Oberfläche der ersten Seite 12 mittels mindestens einer Klebeschicht 30 mit der genoppten Oberfläche der ersten Seite 22 der zweiten Platte 20 verklebt ist. Die Erfindung betrifft weiterhin ein Verfahren zur Herstellung eines entsprechenden Reinigungskörpers.

## Beschreibung

### 1. Gebiet der Erfindung

Die vorliegende Erfindung betrifft einen Reinigungskörper mit Schichten aus Melamininharz-Schaumstoff. Derartige Reinigungskörper werden aufgrund ihrer leicht abrasiven Eigenschaften als sogenannte "Schmutzradierer" eingesetzt. Aufgrund ihrer guten Reinigungswirkung können solche Reinigungskörper bevorzugt auch zur maschinellen Reinigung von Bodenbelägen unterschiedlicher Materialien und Oberflächenstrukturen verwendet werden.

### 2. Stand der Technik

Reinigungskörper aus Melaminharz-Schaumstoff werden als universelle "Schmutzradierer" und zur Reinigung von Bodenbelägen mit planen und strukturierten Oberflächen, wie beispielswiese aus Kunststoff, Fliesen, Keramik, Hartbelag- und Natursteinböden eingesetzt. Die reinigende Wirkung besteht darin, dass die Reinigungskörper aufgrund ihrer leicht abrasiven Eigenschaft wie ein sanftes Schmirgelpapier wirken. Die abrasive Eigenschaft besteht darin, dass die Reinigungskörper aus Melaminharz-Schaumstoff im Gegensatz zu anderen Schaumstoffen trotz ihrer feinen offenzelligen Struktur und Biegsamkeit hart wie Glas sind. Mit Wasser angefeuchtet wird der Melaminharz-Schaumstoff gleitend und kann somit starke Verschmutzungen auf den Oberflächen beseitigen.

Insbesondere können die Reinigungskörper eine Seite mit profilierter Oberfläche, beispielsweise mit nachgiebigen Noppen aufweisen und somit in tiefere Stellen der Oberfläche von strukturierten Bodenbelägen eindringen und diese schonend, gründlich und effektiv reinigen. Solche Reinigungskörper sind bereits aus der Offenlegungsschrift DE 10 2010 029 128 A1 bekannt.

Jedoch stellt die Haltbarkeit von Reinigungskörpern aus Melaminharz-Schaumstoff ein bis jetzt noch nicht optimal gelöstes Problem dar. Die reinigende Seite zeigt insbesondere bei einer profilierten Oberfläche bei der Verwendung eine vergleichsweise hohe Abnutzung.

Die vorliegende Erfindung stellt sich daher der Aufgabe, einen Reinigungskörper bereitzustellen, welcher einen geringeren Verschleiß als der Stand der Technik aufweist, ohne dass dabei die reinigende Wirkung des Melaminharz-Schaumstoffes leidet.

### 3. Zusammenfassung der Erfindung

Die oben genannte Aufgabe wird gelöst durch einen Reinigungskörper gemäß Anspruch 1 sowie durch ein Verfahren gemäß Anspruch 15.

Insbesondere wird die oben genannte Aufgabe gelöst durch einen Reinigungskörper aufweisend eine erste Platte aus Melaminharzschaum und eine zweite Platte aus Melaminharzschaum, wobei die erste Platte an einer ersten Seite eine genoppte Oberfläche aufweist und die zweite Platte an einer ersten Seite eine genoppte Oberfläche aufweist, wobei die erste Platte an der genoppten Oberfläche der ersten Seite mittels mindestens einer Klebeschicht mit der genoppten Oberfläche der ersten Seite der zweiten Platte verklebt ist. Durch die Verzahnung der Noppen der ersten und zweiten Platte und deren Verklebung mittels einer Klebeschicht wird der Reinigungskörper insgesamt stabiler, druckfester, biegsamer und reißfester und zeigt somit eine gesteigerte Gebrauchsfestigkeit. Weiterhin vergrößert sich durch die Noppung der Klebeflächen die Oberfläche so dass die Verklebung mechanisch sehr stabil ist. Ferner zeigt der Reinigungskörper aufgrund der verklebten, mindestens zweischichtigen Plattenstruktur eine erhöhte Haltbarkeit. Die dreidimensionale Klebeschicht zwischen den ineinander verzahnten Melaminharzplatten bildet ein Gerüst, das den Melaminharzschaum elastisch stützt und verstärkt. Damit verbraucht sich der Melaminharzschaum während der Benutzung weniger stark als Reinigungskörper des Standes der Technik. Somit bleibt die reinigende und abrasive Wirkung des Melaminharz-Schaumstoffs wesentlich länger erhalten als bei herkömmlichen einschichtigen Melaminharz-Reinigungskörpern.

Bevorzugt weist die Klebeschicht ein kalthärtendes Kunstharz auf. Die erste und zweite Platte können mittels unterschiedlicher Materialien miteinander verklebt werden. Vorteilhafterweise erfolgt die Verklebung mit einem kalthärtenden Kunstharz, da die Melaminharzplatten wie Isolationsschichten wirken und somit kein Wärmeeintrag an die Klebeschicht erfolgen kann. Durch das kalthärtende Kunstharz wird eine unlösbare Verklebung zwischen den beiden Platten erzeugt.

Bevorzugt weist die Klebeschicht weiterhin ein Viskosevlies, ein Synthetikfaservlies oder ein Gewebe oder Kombinationen davon auf. Zusätzlich zum Kunstharz oder der Schmelzschicht können in die Klebeschicht weitere Materialien zur verbesserten Verfestigung und Stabilisierung des Melaminharz-Schaumstoffs eingebracht werden. Diese Vliese und Gewebe verfestigen die Klebeschicht zusätzlich und machen den Reinigungskörper insgesamt noch stabiler, reißfester und haltbarer. Vliese und Gewebe wirken in der Art einer Armierung für den Reinigungskörper.

Bevorzugt sind die genoppten Oberflächen der ersten Seiten der ersten und zweiten Platte komplementär zueinander ausgebildet. Durch die Komplementarität der Noppen und Verklebung der genoppten komplementären Flächen ist die Klebeschicht homogen dick und die Verzahnung der Platten besonders stabil. Dies macht den Reinigungskörper insgesamt gebrauchsfester.

Bevorzugt wurden die erste Platte und die zweite Platte durch einen gemeinsamen Noppungsschnitt aus einer einzigen Ausgangsplatte erzeugt. Die einzelnen Platten können aus einer einzigen Ausgangsplatte hergestellt werden, indem in einem gemeinsamen Noppungsschnitt eine bestimmte zueinander komplementäre Noppung der beiden sich ergebenden Platten erzeugt wird. Selbstverständlich ist es möglich eine einzige Ausgangsplatte auch durch entsprechende Noppungsschnitte in drei oder mehr Platten zu schneiden um damit nach der nachfolgenden Verklebung einen drei- oder mehrschichtigen Reinigungskörper zu erzeugen.

Bevorzugt weist der Reinigungskörper eine erste Seite mit einer profilierten Oberfläche auf. Die profilierte Oberfläche ist besonders geeignet, um tiefere Stellen einer strukturierten und zu reinigenden Oberfläche zu erreichen und auch in diesen tiefen Stellen gründlich und effektiv zu reinigen.

Bevorzugt weist die profilierte Oberfläche der ersten Seite des Reinigungskörpers nachgiebige Noppen auf, wobei die Noppen eine Pyramidenform, eine

Pyramidenstumpfform, eine Kegelform, eine Kegelstumpfform oder im Querschnitt eine Wellenform aufweisen. Die nachgiebigen Noppen sind besonders gut geeignet, um tiefere Stellen einer strukturierten und zu reinigenden Oberfläche zu erreichen und auch in diesen Stellen gründlich und effektiv zu reinigen. Bei der Pyramidenform und Kegelform ergeben sich vergleichsweise spitze Erhebungen der Noppen, sodass fein strukturierte Bodenbeläge besser gereinigt werden können. Bei der Pyramidenstumpfform und Kegelstumpfform ergibt sich eine abgeflachte Spitze, was für gröber strukturierte Bodenbeläge, insbesondere auch für Noppenbeläge, vorteilhaft ist. Bei der im Querschnitt gesehenen Wellenform haben die Noppen eine abgerundete Spitze und gehen dann in einen eher stumpfen Noppenbereich über. Damit sind sie sowohl für feine als auch gröber strukturierte Bodenbeläge geeignet.

Bevorzugt weist der Reinigungskörper eine zweite Seite mit einer planen Oberfläche auf. An dieser zweiten Seite kann der Reinigungsköper an einer Reinigungsmaschine befestigt werden. Beispielsweise kann auf diese Seite zum Reinigen von Bodenbelägen eine Bodenreinigungsmaschine mit Borstenteller aufgesetzt werden.

Bevorzugt weist der Reinigungskörper weiterhin eine Kletthaftschicht auf, welche auf der zweiten Seite des Reinigungskörpers befestigt ist. Mittels der Kletthaftschicht kann der Reinigungsköper sicher an einem Schleifteller oder einer Schleifplatte einer Schleif- oder Reinigungsmaschine befestigt werden. Damit kann der Reinigungskörper auch zur maschinellen Reinigung mit solchen Maschinen eingesetzt werden.

Bevorzugt weist der Reinigungskörper weitere Platten aus Melaminharzschaum, mit ersten und zweiten genoppten Oberflächen auf, die mit der ersten oder der zweiten Platte und miteinander über weitere Klebeschichten miteinander verklebt sind. Der erfindungsgemäße Reinigungskörper besteht aus mindestens zwei miteinander verzahnten und verklebten Platten und ist daher zumindest zweischichtig. Um die Stabilität des Reinigungskörpers oder dessen Dicke weiter zu erhöhen, können weitere Platten mit den jeweiligen Klebeschichten hinzugefügt werden, und so einen drei- oder mehrschichtigen Reinigungskörper gebildet werden.

Bevorzugt besteht der Melaminharzschaum aus einem offenzelligen und abrasiven Schaumstoffmaterial. Dieses Material hat sich als besonders vorteilhaft erwiesen. Durch die filigrane, räumliche Netzstruktur aus schlanken und leicht verformbaren Stegen des Melaminharzschaumes wird eine leicht abrasive Wirkung ohne die Notwendigkeit zusätzlicher Abrasivpartikel erreicht.

Bevorzugt weisen die Platten eine maximale Dicke von 4 mm - 60 mm, bevorzugt 10 mm - 30 mm auf. Aufgrund der Dicke der Platten wird die Nachgiebigkeit der Platten und der Abstand der Klebeschichten sichergestellt. Die Dicke der Platten bestimmt somit auch die Stabilität und Haltbarkeit des Reinigungskörpers.

Bevorzugt ist der Reinigungskörper als runde Reinigungsscheibe oder als rechteckiges Reinigungspad oder als Reinigungsschwamm ausgebildet. Die einzelnen Platten des Reinigungsköpers können unterschiedliche Dicken, Abstände und auch Formen haben, beispielsweise rund oder quadratisch. Je nach Beschaffenheit des zu reinigenden Objekts (z.B. der Bodenbeschaffenheit) und Reinigungszweck können entsprechende Formen des Reinigungsköpers, unterschiedliche Plattenanzahlen, unterschiedliche Noppenhöhen oder unterschiedlichen Materialeigenschaften vorteilhaft sein.

Bevorzugt weist die mindestens eine Klebeschicht Schleifkorn auf, insbesondere ein Schleifkorn mit einer Schleifkorngröße von 500 - 1000. Damit wird auch dann eine Reinigungswirkung gewährleistet, wenn der Melaminharz-Schaum bis auf die Klebeschicht abgearbeitet ist und die Klebeschicht Kontakt zu der zu reinigenden Fläche hat. Damit reinigt der Reinigungskörper dann die zu reinigende Fläche mit einer Kombination aus dem Melaminharz-Schaum zwischen einem Gerüst aus der ebenfalls abrasiven Klebstoffschicht.

Die oben genannten Aufgaben werden auch gelöst durch ein Verfahren zur Herstellung eines Reinigungskörpers, aufweisend die folgenden Schritte:
a. Einführen einer einzigen Ausgangsplatte aus Melaminharz-Schaum in eine Noppenmaschine;
b. Komprimieren der Ausgangsplatte zwischen zwei Noppenwalzen der Noppenmaschine;
c. Schneiden der Ausgangsplatte im komprimierten Zustand mittels mindestens eines Schneidmessers in mindestens zwei Platten; und
d. Verkleben der mindestens zwei Platten, an den zueinander komplementären genoppten Oberflächen mittels einer Klebeschicht.

**Hierdurch wird ein vorteilhafter Reinigungskörper bereitgestellt, der** durch die Verzahnung der Noppen der ersten und zweiten Platte und deren Verklebung mittels einer Klebeschicht wird der Reinigungskörper insgesamt stabiler, druckfester, biegsamer und reißfester ist und somit eine gesteigerte Gebrauchsfestigkeit zeigt. Weiterhin vergrößert sich durch die Noppung der Klebeflächen die Oberfläche so dass die Verklebung mechanisch sehr stabil ist. Insgesamt wird dadurch die Standzeit des Reinigungskörpers gegenüber einem normalen Reinigungskörper aus Melaminharzschaum signifikant erhöht.

### 4. Kurze Beschreibung der Figuren

Im Folgenden werden bevorzugte Ausführungsformen der Erfindung anhand der begleitenden Zeichnungen beschrieben, in denen zeigt:
- Fig. 1:: eine Ausführungsform eines erfindungsgemäßen Reinigungskörpers in perspektivischer Ansicht;
- Fig. 2:: eine weitere Ausführungsform eines vierschichtigen Reinigungskörpers in perspektivischer Ansicht;
- Fig. 3:: eine perspektivische Detailansicht einer weiteren Ausführungsform eines dreischichtigen Reinigungskörpers mit einer Kletthaftschicht und strukturierter Oberfläche; und
- Fig. 4 A - D:: perspektivische Detailansichten unterschiedlicher strukturierter Oberflächen von Ausführungsformen eines erfindungsgemäßen Reinigungskörpers.

### 5. Beschreibung der bevorzugten Ausführungsformen

Im Folgenden werden bevorzugte Ausführungsformen der vorliegenden Erfindung mithilfe der begleitenden Figuren beschrieben. Merkmale einzelner Ausführungsformen können auch mit jenen anderen Ausführungsformen kombiniert werden, obwohl solche Kombinationen im Einzelfall nicht im Detail dargestellt sind.

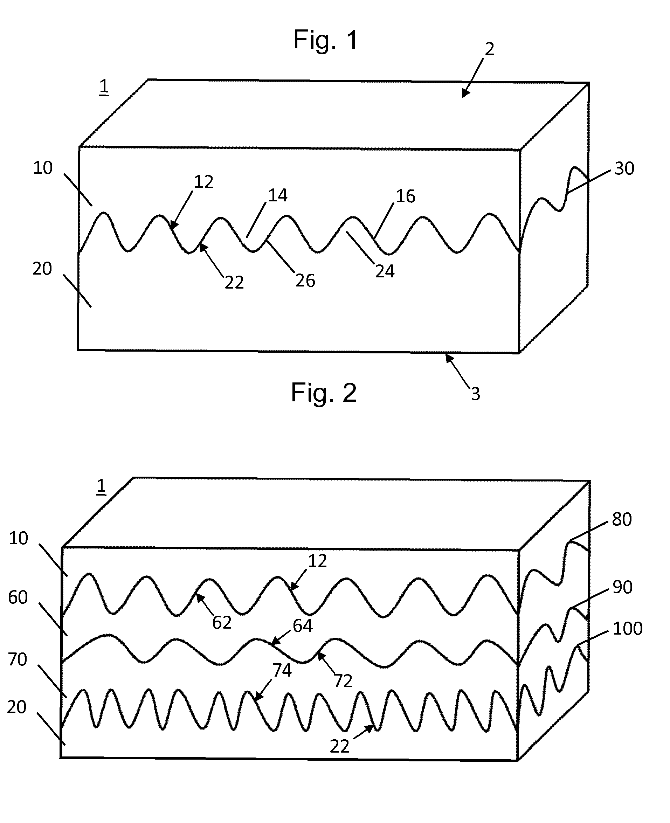

Figur 1 zeigt einen erfindungsgemäßen Reinigungskörper 1 in zweischichtigem Aufbau. Der Reinigungskörper 1 weist eine erste 10 und eine zweite Platte 20 aus Melaminharzschaum auf, die jeweils eine erste Seite 12, 22 mit einer genoppten Oberfläche besitzen. Die genoppte Oberfläche der ersten Seiten 12, 22 weist über die Oberfläche bevorzugt gleichmäßig verteilte Noppen 14, 24 auf. Bevorzugt haben die Noppen 14, 24 im Querschnitt eine Wellenform und sind zueinander komplementär ausgebildet. Damit passt beispielsweise die Noppe 14 der ersten Platte 10 lückenlos in ein Noppental 26 der zweiten Platte 20 ein. Bevorzugt passen alle Noppen der ersten Seite 12, 22 einer Platte 10, 20 in die entsprechenden Noppentäler 16, 26 der ersten Seite 22, 12 der anderen Platte 20, 10. Damit lassen sich die Platten 10, 20 an ihren ersten Seiten lückenlos zusammenfügen und zusammenkleben. Die genoppten Oberflächen der ersten Seiten 12, 22 sind damit komplementär zueinander ausgebildet.

Derartig komplementär zueinander ausgebildete genoppte Oberflächen der Platten 10, 20 lassen sich auf einfachste Art und Weise durch einen gemeinsamen Noppungsvorgang erzeugen. Der Noppungsvorgang läuft wie folgt ab:
a. Einführen einer einzigen Ausgangsplatte aus Melaminharz-Schaum in eine Noppenmaschine;
b. Komprimieren der Ausgangsplatte zwischen zwei Noppenwalzen der Noppenmaschine; und
c. Schneiden der Ausgangsplatte im komprimierten Zustand mittels mindestens eines Schneidmessers in mindestens zwei Platten 10, 20.

Durch den gemeinsamen Noppungsschnitt in einer Noppenmaschine werden zwei Platten 10, 20 mit zueinander komplementären genoppten Oberflächen erzeugt. Diese mindestens zwei Platten 10, 20 werden dann in verzahntem Zustand miteinander verklebt, um einen erfindungsgemäßen Reinigungskörper 1 herzustellen.

Beim Verkleben werden die komplementären und genoppten Oberflächen der ersten Seiten 12, 22 durch eine Klebeschicht 30 miteinander verbunden. Die Klebeschicht 30 kann ein geeignetes Kunstharz aufweisen. Ein kalthärtendes Kunstharz hat sich als Klebeschicht 30 bewährt, da es keinen Wärmeeintrag benötigt, um zu verfestigen.

Zur Verstärkung der Klebeschicht 30 kann beim Verklebevorgang ein Viskosevlies, ein Synthetikfaservlies, ein Gewebe oder Kombinationen davon zwischen die Platten 10, 20 in die Klebeschicht 30 eingelegt werden. Diese zusätzlichen Vliese oder Gewebe wirken wie eine Armierung und Verstärken weiterhin den Reinigungskörper 1. Dies ist insbesondere deshalb vorteilhaft, da der Melaminharzschaum der Platten 10, 20 aus einem offenzelligen und abrasiven Schaumstoffmaterial besteht, das besonders gute Reinigungseigenschaften zeigt, aber selbst sehr brüchig und mechanisch wenig widerstandsfähig ist und sich deshalb schnell abnutzt. Durch die Klebeschicht 30 und optional die Armierung aus Vliesen und Geweben wird die Standzeit bzw. Haltbarkeit des Melaminharzschaums des Reinigungskörpers 1 signifikant erhöht.

Die Klebeschicht 30 kann auch Schleifkorn aufweisen, insbesondere mit einem Schleifkorn durchmischt sein, um ihre Reinigungswirkung zu erhöhen. Auch eine solche abrasive Klebeschicht kann durch ein Gießverfahren auf eine der zu verklebenden genoppten Oberflächen 12, 22 aufgebracht werden. Bevorzugt wird hierzu ein feines Schleifkorn mit einer Schleifkorngröße von 500 - 1000 verwendet. So ist auch dann eine Reinigungswirkung gewährleistet, wenn der Melaminharz-Schaum 10, 20 bis auf die Klebeschicht 30 abgearbeitet ist und die Klebeschicht 30 Kontakt zu der zu reinigenden Fläche hat. Damit reinigt der Reinigungskörper 1 dann die zu reinigenden Fläche mit einer Kombination aus dem Melaminharz-Schaum 10, 20 zwischen einem Gerüst aus der ebenfalls abrasiven Klebstoffschicht 30.

Der Reinigungsköper 1 der Fig. 1 weist Seiten 2, 3 mit planen Oberflächen auf. Damit eignet er sich beispielsweise als Schmutzradierer und zur Reinigung von glatten Oberflächen.

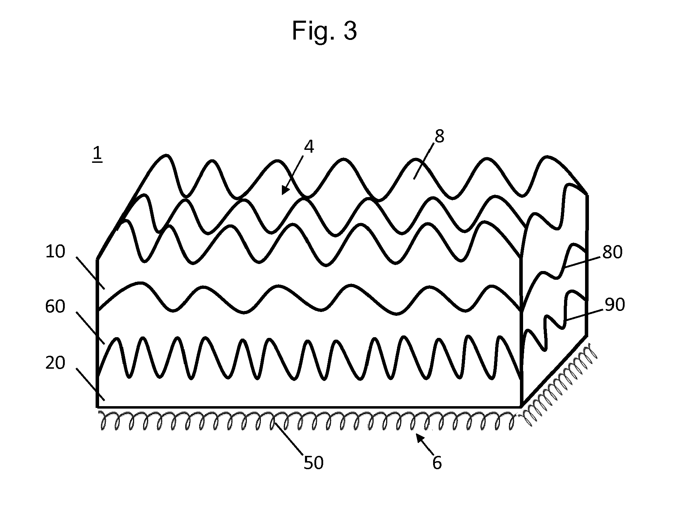

Alternativ können Seiten 2, 3 des Reinigungsköpers 1 auch eine profilierte Oberfläche 4 aufweisen, wie in Fig. 3 für die Seite 2 dargestellt. Ein solcher Reinigungskörper 1 eignet sich insbesondere zur Reinigung von strukturierten Oberflächen, z.B. von strukturierten Böden. Die profilierten Oberfläche 4 kann mit tieferen Bereichen der zu reinigenden strukturierten Oberflächen in Kontakt treten und ist damit insbesondere dazu geeignet, diese tiefen Bereiche gründlich und effektiv zu reinigen.

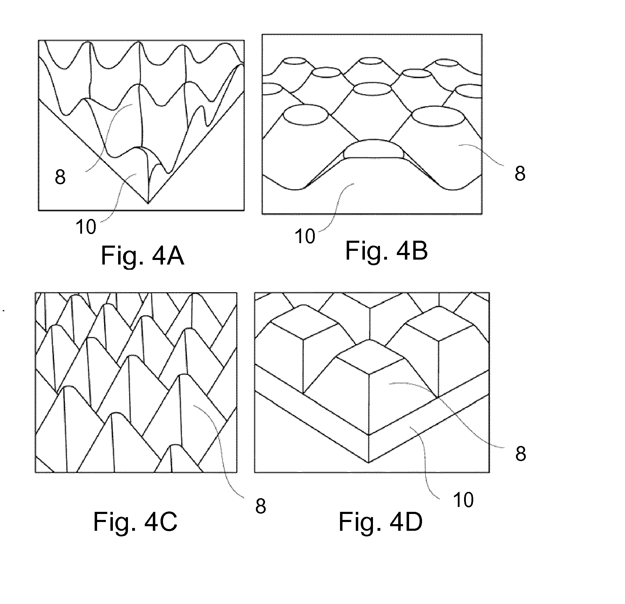

Bevorzugt weist die profilierte Oberfläche 4 Noppen 8 auf. Die Noppen 8 können unterschiedlichen Noppenformen aufweisen, wie sie beispielhaft in Fig. 4 dargestellt sind. Dabei zeigt Fig. 4A Noppen 8, die im Querschnitt eine Wellenform aufweisen, Fig. 4B Noppen, die eine Kegelstumpfform aufweisen, Fig. 4C Noppen, die eine Pyramidenform aufweisen und Fig. 4D Noppen 8, die eine Pyramidenstumpfform aufweisen. Durch die Wahl der Form und Größe der Noppen 8 kann der Reinigungsköper 1 optimal an die jeweilige Reinigungsaufgabe, insbesondere an die Oberflächenstruktur des zu reinigenden Gegenstandes, z.B. eines strukturierten Bodens, angepasst werden. Für die Reinigung eines Kunststoffbodens mit Schieferstruktur wird man zweckmäßigerweise eine spitzer ausgebildete Noppenform wählen, beispielsweise eine spitze Pyramidenstruktur oder Kegelstruktur, während man für die Reinigung des Bodens mit Hammerschlag- oder Rundnoppenstruktur eher eine an der Spitze rund ausgebildete Noppe 8 einsetzen wird.

Fig. 2 zeigt eine weitere bevorzugte Ausführungsform eines erfindungsgemäßen Reinigungskörpers 1. In dieser Ausführungsform weist der Reinigungskörper 1 einen vierschichtigen Aufbau auf. Entsprechend umfasst er neben einer ersten und zweiten Platte 10, 20 aus Melaminharzschaum zwei weitere dazwischenliegende mittlere Platten 60, 70 aus Melaminharzschaum. Wie in Fig. 2 schematisch dargestellt, weisen die mittleren Platten 60, 70 zwei gegenüberliegende Seiten mit genoppten Oberflächen 62, 64 bzw. 72, 74 auf, an denen diese mit den genoppten Oberflächen der Seiten 12, 22 der angrenzenden Platten 10, 20 verklebt sind. Die mittlere Platte 60 weist in diesem Fall eine gemeinsame Klebeschicht 80 mit der ersten oberen Platte 10 und eine gemeinsame Klebeschicht 100 mit der mittleren Platte 70 auf. Die andere mittlere Platte 70 weist eine gemeinsame Klebeschicht 90 mit der unteren Platte 20 und eine gemeinsame Klebeschicht 100 mit der mittleren Platte 60 auf.

Fig. 3 zeigt einen bevorzugten dreischichtigen Reinigungskörper 1 mit drei Schichten bzw. Platten aus Melaminharzschaum 10, 20, 60. Auch hier sind die Schichten bzw. Platten 10, 20, 60 komplementär zueinander genoppt und mittels Klebeschichten an den genoppten Flächen miteinander verklebt.

Durch den mehrschichtigen Aufbau des Reinigungskörpers 1 wird dieser, trotz einer größeren Gesamtdicke, durch die dazwischenliegenden Klebeschichten 30, 80, 90, 100 besonders stabil und haltbar. Die Platten haben bevorzugt eine maximale Dicke von 5 mm - 60 mm, bevorzugt 5 mm - 30 mm. Damit haben Reinigungsköper 1 bevorzugt eine Gesamtdicke von 10 mm - 80 mm.

Weiterhin kann der Reinigungskörper 1 eine Seite 3 mit einer planen Oberfläche 6 aufweisen, welche mit einer Kletthaftschicht 50 versehen sein kann. In Fig. 3 ist die Kletthaftschicht 50 beispielsweise an der Unterseite eines bevorzugten dreischichtigen Reinigungskörpers 1 mit drei Platten aus Melaminharzschaum 10, 20, 60 befestigt. Mittels der Kletthaftschicht 50 kann der Reinigungskörper 1 an einer Bodenreinigungsmaschine, insbesondere an einem Teller einer Bodenreinigungsmaschine befestigt werden. Auch kann der Reinigungskörper 1 mit der Kletthaftschicht 50 an einem Schleifteller einer Rotationsschleifmaschine angeklettet werden. Somit kann der Reinigungskörper 1 insbesondere zur maschinellen Reinigung von strukturierten Gegenständen und strukturierten Bodenbelägen verwendet werden.

Ein erfindungsgemäßer Reinigungskörper 1 mit Schichten aus Melaminharzschaum kann auch mit weiteren Schichten ergänzt werden, die nicht aus einem Melaminharzschaum bestehen. Damit können insbesondere Reinigungskörper hergestellt werden, die Nutzschichten aus Melaminharzschaum und Tragschichten aus einem anderen Material umfassen.

### Bezugszeichenliste

- 1: Reinigungskörper
- 2, 3: Seite des Reinigungskörpers
- 4: erste Seite mit einer profilierten Oberfläche
- 6: zweite Seite mit einer planen Oberfläche
- 8: Noppen
- 10: erste Platte aus Melaminharzschaum
- 12: erste Seite der ersten Platte mit genoppter Oberfläche
- 14: Noppe
- 16: Noppental
- 20: zweite Platte aus Melaminharzschaum
- 22: erste Seite der zweiten Platte mit genoppter Oberfläche
- 24: Noppe
- 26: Noppental
- 30: Klebeschicht zwischen den genoppten Oberflächen der ersten und zweiten Platte
- 50: Kletthaftschicht
- 60: mittlere Platte aus Melaminharzschaum
- 62, 64: genoppte Oberfläche
- 70: mittlere Platte aus Melaminharzschaum
- 72, 74: genoppte Oberfläche
- 80, 90, 100: Klebeschicht

## Patentansprüche

1. Reinigungskörper (1) aufweisend:
a. eine erste Platte (10) aus Melaminharzschaum; und
b. eine zweite Platte (20) aus Melaminharzschaum; wobei
c. die erste Platte (10) an einer ersten Seite (12) eine genoppte Oberfläche aufweist; und
d. die zweite Platte (20) an einer ersten Seite (22) eine genoppte Oberfläche aufweist; wobei
e. die erste Platte (10) an der genoppten Oberfläche der ersten Seite (12) mittels mindestens einer Klebeschicht (30) mit der genoppten Oberfläche der ersten Seite (22) der zweiten Platte (20) verklebt ist.

2. Reinigungskörper gemäß Anspruch 1, wobei die Klebeschicht (30) ein kalthärtendes Kunstharz aufweist.

3. Reinigungskörper gemäß Anspruch 2, wobei die Klebeschicht (30) weiterhin ein Viskosevlies, ein Synthetikfaservlies, ein Gewebe oder Kombinationen davon aufweist.

4. Reinigungskörper gemäß einem der Ansprüche 1 - 3, wobei die genoppten Oberflächen der ersten Seiten (12, 22) der ersten und zweiten Platte (10, 20) komplementär zueinander ausgebildet sind.

5. Reinigungskörper gemäß einem der Ansprüche 1 - 4, wobei die erste Platte (10) und die zweite Platte (20) durch einen gemeinsamen Noppungsschnitt aus einer einzigen Ausgangsplatte erzeugt wurden.

6. Reinigungskörper gemäß einem der Ansprüche 1 - 5, wobei der Reinigungskörper (1) eine erste Seite (4) mit einer profilierten Oberfläche aufweist.

7. Reinigungskörper gemäß Anspruch 6, wobei die profilierte Oberfläche der ersten Seite (4) des Reinigungskörpers (1) nachgiebige Noppen (8) aufweist, wobei die Noppen (8) eine Pyramidenform, eine Pyramidenstumpfform, eine Kegelform, eine Kegelstumpfform oder im Querschnitt eine Wellenform aufweisen.

8. Reinigungskörper gemäß einem der Ansprüche 1 - 7, wobei Reinigungskörper (1) eine zweite Seite (6) mit einer planen Oberfläche aufweist.

9. Reinigungskörper gemäß einem der Ansprüche 1 - 8, weiterhin aufweisend eine Kletthaftschicht (50), welche auf der zweiten Seite (6) des Reinigungskörpers (1) befestigt ist.

10. Reinigungskörper gemäß einem der Ansprüche 1 - 9, weiterhin aufweisend weitere Platten (60, 70) aus Melaminharzschaum, mit ersten und zweiten genoppten Oberflächen (62, 64, 72, 74), die mit der ersten oder der zweiten Platte (10, 20) und miteinander über weitere Klebeschichten (80, 90, 100) verklebt sind.

11. Reinigungskörper gemäß einem der Ansprüche 1 - 10, wobei der Melaminharzschaum aus einem offenzelligen und abrasiven Schaumstoffmaterial besteht.

12. Reinigungskörper gemäß einem der Ansprüche 1 - 11, wobei die Platten (10, 20, 60, 70) eine maximale Dicke von 4 mm - 60 mm, bevorzugt von 10 mm - 30 mm aufweisen.

13. Reinigungskörper gemäß einem der Ansprüche 1 - 12, wobei der Reinigungskörper (1) als runde Reinigungsscheibe oder als rechteckiges Reinigungspad oder als Reinigungsschwamm ausgebildet ist.

14. Reinigungskörper gemäß einem der Ansprüche 1 - 13, wobei mindestens eine Klebeschicht (30, 80, 90, 100) Schleifkorn aufweist, insbesondere ein Schleifkorn mit einer Schleifkorngröße von 500 - 1000.

15. Verfahren zur Herstellung eines Reinigungskörpers (1), aufweisend die folgenden Schritte:
a. Einführen einer einzigen Ausgangsplatte aus Melaminharz-Schaum in eine Noppenmaschine;
b. Komprimieren der Ausgangsplatte zwischen zwei Noppenwalzen der Noppenmaschine;
c. Schneiden der Ausgangsplatte im komprimierten Zustand mittels mindestens eines Schneidmessers in mindestens zwei Platten (10, 20); und
d. Verkleben der mindestens zwei Platten (10, 20), an den zueinander komplementären genoppten Oberflächen (12, 22) durch eine Klebeschicht (30).
